**Europäisches Patentamt**

**European Patent Office**

**Office européen des brevets**

(19)

(11) Veröffentlichungsnummer: **0 155 348 B1**

(12) # EUROPÄISCHE PATENTSCHRIFT

(45) Veröffentlichungstag der Patentschrift: **20.02.91**

(21) Anmeldenummer: **84110201.5**

(22) Anmeldetag: **28.08.84**

(51) Int. Cl.⁵: **H03M 1/30**, G01D 5/245, G08C 15/00, H03M 1/22

(54) **Verfahren zur Signalübertragung bei einer Längen- oder Winkelmesseinrichtung und Einrichtung zur Durchführung des Verfahrens.**

(30) Priorität: **17.10.83 DE 3337653**

(43) Veröffentlichungstag der Anmeldung:
**25.09.85 Patentblatt 85/39**

(45) Bekanntmachung des Hinweises auf die
Patenterteilung:
**20.02.91 Patentblatt 91/08**

(84) Benannte Vertragsstaaten:
**AT CH DE FR GB IT LI NL SE**

(56) Entgegenhaltungen:
**EP-A- 0 050 195**
**GB-A- 1 063 012**

**J. Markus, "Modern Electronic Circuits Reference Manual", McGraw-Hill Book Company, New York, 1980, Seite 591, Schaltung "Eight-Channel MUX/DEMUX"**

(73) Patentinhaber: **Dr. Johannes Heidenhain GmbH**
**Dr.-Johannes-Heidenhain-Strasse 5 Postfach 1260**
**D-8225 Traunreut(DE)**

(72) Erfinder: **Schmitt, Walter, Ing. grad**
**Hochgernstrasse 22**
**D-8225 Traunreut(DE)**

EP 0 155 348 B1

## Beschreibung

Die Erfindung betrifft ein Verfahren zur Signalübertragung bei einer längen-oder Winkelmeßeinrichtung gemäß dem Oberbegriff des Anspruches 1.

In der Druckschrift: J. Markus "Modern Electronic Circuits Reference Manual", McGraw-Hill Book Company, New York, 1980, Seite 591, Figur "Eight-Channel MUX/DEMUX" ist eine Schaltung zur Signalübertragung beschrieben, bei der auf der Senderseite ein erster Multiplexer mit acht Eingängen über eine erste Leitung mit einem zweiten Multiplexer mit acht Ausgängen auf der Empfangsseite verbunden ist. Von der Senderseite wird ein periodisches Signal mit einem Reset-Impuls auf einer zweiten Leitung zur Empfangsseite übertragen, um die Signalübertragung zwischen den beiden Multiplexern zu synchronisieren.

Aus der DE-OS 30 39 483 ist eine inkrementale Meßeinrichtung bekannt, bei der der Teilung eines ?Maßstabs identische Referenzmarken absolut zugeordnet sind, denen zur Identifizierung jeweils eine Codemarke zugeordnet ist. Die Teilung, die Referenzmarken und die zugehörigen Codemarken des Maßstabs werden von zugeordneten Abtastfeldern einer Abtasteinheit abgetastet. Bei der Abtastung der Teilung werden von der Abtasteinheit zwei periodische Abtastsignale erzeugt, die zur Diskriminierung der Meßrichtung um 90° (ein Viertel der Teilungsperiode der Teilung) zueinander phasenversetzt sind und jeweils über eine Abtastsignalleitung einer Auswerteeinrichtung zur Ermittlung der Relativlage der zu messenden Objekte zugeleitet werden. Bei der Abtastung der Referenzmarken wird von der Abtasteinheit jeweils ein Referenzimpuls erzeugt, der über eine Referenzimpulsleitung der Auswerteeinrichtung zugeführt wird. Gleichfalls werden die von der Abtasteinheit bei der Abtastung der zugehörigen Codemarken erzeugten Codeimpulse über eine Codeimpulsleitung der Auswerteeinrichtung zugeführt.

Bei einer derartigen Meßeinrichtung können die an den Referenzmarken erzeugten elektrischen Referenzimpulse auf verschiedene Weise verwertet werden, z.B. zum Reproduzieren der Nullposition im Zähler, zum Anfahren einer bestimmten Position zu Beginn der Messung und zur Kontrolle von Störimpulsen sowie zur Beaufschlagung einer nachgeschalteten Steuereinrichtung.

Der Erfindung liegt die Aufgabe zugrunde, bei einer Einrichtung der eingangs erwähnten Gattung die Anzahl der benötigten Übertragungsleitungen zu verringern.

Diese Aufgabe wird durch die kennzeichnenden Merkmale des Anspruchs 1 gelöst.

Die mit der Erfindung erzielten Vorteile bestehen insbesondere darin, daß durch die Mehrfachbelegung von Übertragungsleitungen deren Anzahl reduziert werden kann, so daß sich insbesondere bei langen Übertragungsleitungen eine gewisse Kostensenkung und Vereinfachung sowie eine erleichterte Montage ergeben.

Vorteilhafte Weiterbildungen der Erfindung entnimmt man den Unteransprüchen.

Ausführungsbeispiele der Erfindung werden anhand der Zeichnung näher erläutert.

Es zeigen

Figur 1    eine inkrementale gekapselte Meßeinrichtung im Querschnitt,

Figur 2    einen Maßstab und eine Abtastplatte,

Figur 3    einen Signalplan und

Figur 4    eine Schaltungsanordnung.

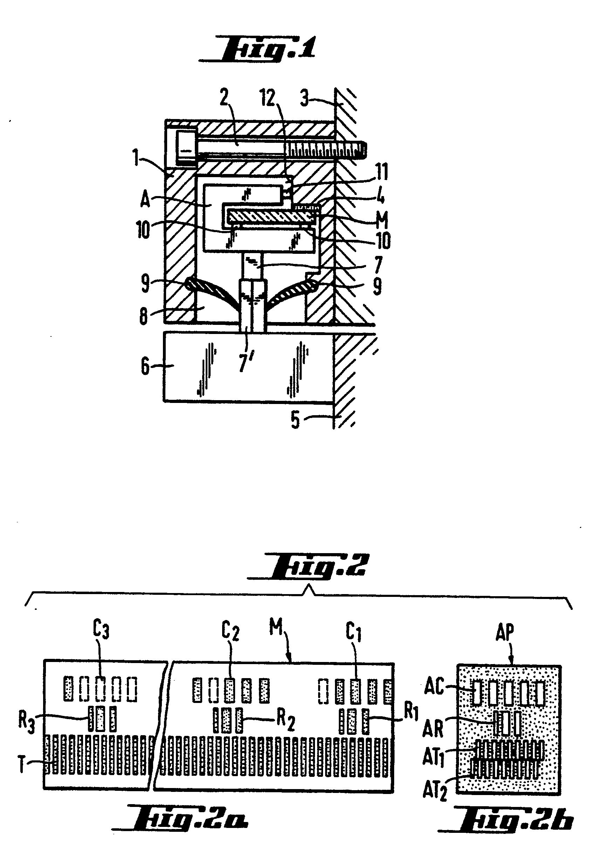

In Figur 1 ist eine inkrementale gekapselte Längenmeßeinrichtung im Querschnitt dargestellt, bei der ein Gehäuse 1 in Form eines Hohlprofils mittels Schrauben 2 an einem zu messenden Objekt 3 in Form eines Schlittens einer nicht gezeigten Bearbeitungsmaschine befestigt ist. Im Inneren des Gehäuses 1 ist mittels einer elastischen Klebeschicht 4 ein Maßstab M befestigt, der von einer Abtasteinheit A abgetastet wird. An dem anderen zu messenden Objekt 5 in Form eines Betts der Bearbeitungsmaschine ist ein Montagefuß 6 in beliebiger Weise befestigt, der über einen Mitnehmer 7 mit der Abtasteinheit A verbunden ist. Das Gehäuse 1 weist einen in Längserstreckung verlaufenden Schlitz 8 auf der durch Dichtlippen 9 verschlossen ist, durch die der Mitnehmer 7 mit einem schwertförmigen Bereich 7' hindurchgreift. Die Abtasteinheit A ist mittels Rollen 10 an Führungsflächen des Maßstabs M und mittels Rollen 11 an einer Führungsfläche 12 des Gehäuses 1 verschiebbar.

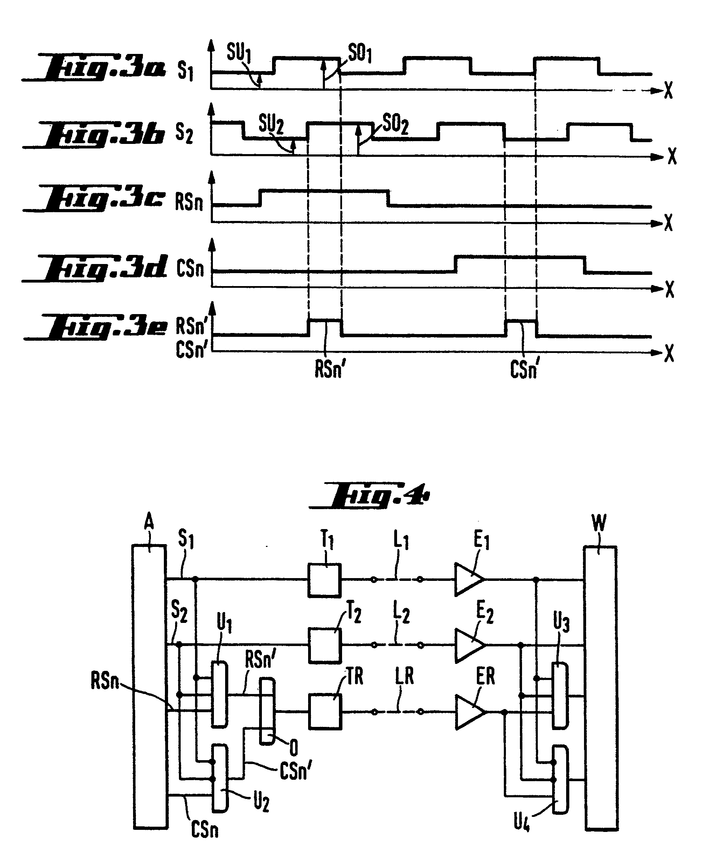

Nach Figur 2 weist der Maßstab M eine inkrementale Teilung T in Form eines Strichgitters auf die von der Abtasteinheit A abgetastet wird. Entlang der Teilung T ist auf dem Maßstab M eine Reihe von identischen Referenzmarken $R_n$ (n = 1, 2, 3) vorgesehen, die der Teilung T absolut zugeordnet sind. Zur Identifizierung ist jeder einzelnen Referenzmarke $R_n$ jeweils eine Codemarke $C_n$ zugeordnet.

Zur Abtastung der Teilung T des Maßstabs M ist in der Abtasteinheit A eine Abtastplatte AP angeordnet, die zwei um ein Viertel der Gitterkonstanten (Teilungsperiode) der Teilung T zueinander versetzte Abtastfelder $AT_1$, $AT_2$ aufweist deren Teilungen mit der Teilung T identisch sind. Zur Abtastung der Referenzmarken Rn ,sind auf der Abtastplatte AP ein Abtastfeld AR und zur Abtastung der Codemarken $C_n$ ein Abtastfeld AC vorgesehen.

Den Abtastfeldern $AT_1$, $AT_2$, AR, AC ist in der Abtasteinheit A jeweils ein nicht dargestelltes Photoelement zugeordnet. Die den Abtastfeldern $AT_1$, $AT_2$ zugeordneten Photoelemente liefern zwei periodische, um ein Viertel der Gitterkonstanten (Teilungsperiode) der Teilung T zueinander phasenversetzte Abtastsignale, die in der Abtasteinheit A in nicht gezeigter Weise verstärkt und in periodische rechteckförmige Abtastsignale $S_1$, $S_2$ gemäß Figur 3a, b umgewandelt werden; der gegenseitige Phasenversatz von 90° zwischen den beiden periodischen Abtastsignalen $S_1$, $S_2$ erlaubt' die Diskriminierung der Abtastrichtung.

Das dem Abtastfeld AR zugeordnete Photoelement liefert bei der Abtastung der Referenzmarke $R_n$ einen nichtperiodischen Referenzimpuls und das dem Abtastfeld AC zugeordnete Photoelement bei der Abtastung der zugehörigen codemarke $C_n$ einen nichtperiodischen Codeimpuls, die in der Abtasteinheit A verstärkt und in einen rechteckförmigen Referenzimpuls $RS_n$ (Figur 3c) und in einen zugehörigen rechteckförmigen Codeimpuls $CS_n$ - (Figur 3d umgewandelt werden. Die Abtastsignale $S_1$, $S_2$ und die Impulse $RS_n$, $CS_n$ sind in Figur 3 in Abhängigkeit von der Relativlage X der zu messenden Objekte 3, 5 dargestellt.

Mit den gewonnenen Referenzimpulsen $RS_n$ können verschiedene Funktionen ausgelöst werden. Durch Auswertung der Referenzimpulse $RS_n$ wird beispielsweise aus einer inkrementalen Meßeinrichtung eine quasi absolute Meßeinrichtung, wenn jeder Referenzmarke $R_n$ eine Zahl zugeordnet ist, die deren absolute Position, bezogen auf einen unveränderlichen Nullpunkt, darstellt. Ferner kann eine bestimmte Referenzmarke $R_n$ dazu dienen, den Zähler der Meßeinrichtung beim Auftreten des aus der bestimmten Referenzmarke $R_n$ gewonnenen Referenzimpulses $RS_n$ auf den Wert "Null" zu setzen.

Gemäß Figur 4 werden die periodischen Abtastsignale $S_1$' $S_2$ von der Abtasteinheit A jeweils über eine eigene Leitung $L_1$, $L_2$ einer Auswerteeinrichtung W zur Ermittlung der Relativlage der zu messenden Objekte 3, 5 zugeführt. Diese Leitungen $L_1$, $L_2$ weisen an den Enden insbesondere bei größeren Längen jeweils einen Leitungstreiber $T_1$, $T_2$ sowie einen Leitungsempfänger $E_1$, $E_2$ auf. In gleicher Weise wird auch der von der Abtasteinheit A erzeugte Referenzimpuls $RS_n$ der Auswerteeinrichtung W über eine Leitung LR zugeführt, die ebenfalls einen Leitungstreiber TR und einen Leitungsempfänger ER aufweist. Die Leitungstreiber $T_1$, $T_2$, TR und die Leitungsempfänger $E_1$, $E_2$, ER dienen bei der Übertragung zur Wahrung der Signalgüte sowie der Störunempfindlichkeit.

Die Übertragung des von der Abtasteinheit A erzeugten Codeimpulses $CS_n$ an die Auswerteeinrichtung W erfolgt nicht über eine eigene Leitung, sondern erfindungsgemäß über die Leitung LR für den Referenzimpuls $RS_n$, indem zur gegenseitigen Unterscheidung der Codeimpuls $CS_n$ beispielsweise den unteren Signalzuständen $SU_1$, $SU_2$ und der

Referenzimpuls $RS_n$ den oberen Signalzuständen $SO_1$, $SO_2$ der beiden periodischen Abtastsignale $S_1$, $S_2$ zugeordnet werden (der obere Signalzustand $SO_1$, $SO_2$ oder Signalpegel kennzeichnet die logische Eins und der untere Signalzustand $SU_1$, $SU_2$ oder Signalpegel die logische Null der periodischen rechteckförmigen Abtastsignale $S_1$, $S_2$).

Zu diesem Zweck sind der Abtasteinheit A zwei Und-Gatter $U_1$, $U_2$ nachgeschaltet. Die ersten Eingänge der beiden Und-Gatter $U_1$, $U_2$ sind mit der Leitung $L_1$ und die zweiten Eingänge mit der Leitung $L_2$ verbunden. Am dritten Eingang des Und-Gatters $U_1$ liegen der Referenzimpuls $RS_n$ und am dritten Eingang des Und-Gatters $U_2$ der Codeimpuls $CS_n$ an; der erste und zweite Eingang des Und-Gatters $U_2$ sind invertierende Eingänge. Wenn an den Eingängen des Und

Gatters $U_1$ gleichzeitig der Referenzimpuls $RS_n$ und die oberen Signalzustände $SO_1$, $SO_2$ der beiden Abtastsignale $S_1$ $S_2$ anliegen, erscheint am Ausgang des Und-Gatters $U_1$ ein Referenzimpuls $RS_n$' mit einer Impulslänge eines Viertels der Gitterkonstanten der Teilung T (Figur 3e). Wegen seiner beiden invertierenden Eingänge ist das Und-Gatter $U_2$ bei diesen oberen Signalzuständen $SO_1$, $SO_2$ der Abtastsignale $S_1$, $S_2$ gesperrt. Wenn an den Eingängen des Und-Gatters $U_2$ gleichzeitig der Codeimpuls $CS_n$ und die unteren signalzustände $SU_1$, $SU_2$ der beiden Abtastsignale $S_1$, $S_2$ anliegen, erscheint am Ausgang des Und-Gatters $U_2$ ein Codeimpuls $Cs_n$, mit einer Impulslänge eines Viertels der Gitterkonstanten der Teilung T (Figur 3e), während das Und-Gatter $U_1$ bei diesen unteren Signalzuständen $SU_1$, $SU_2$ gesperrt ist.

Der Codeimpuls $Cs_n$' und der Referenzimpuls $RS_n$' gelangen nacheinander über ein Oder-Gatter 0 sowie über den Leitungstreiber TR und den Empfänger ER der Leitung LR an den dritten Eingang eines Und-Gatters $U_3$ und an den dritten Eingang eines Und-Gatters $U_4$. Die ersten Eingänge der beiden Und-Gatter $U_3$, $U_4$ sind mit der Leitung $L_1$ und die zweiten Eingänge mit der Leitung $L_2$ verbunden; der erste und zweite Eingang des Und-Gatters $U_4$ sind invertierende Eingänge. Wenn an den Eingängen des Und-Gatters $U_4$ gleichzeitig der Codeimpuls $CS_n$' und die unteren Signalzustände $SU_1$, $SU_2$ der beiden Abtastsignale $S_1$, $S_2$ anliegen, wird der Codeimpuls $Cs_n$' vom Ausgang des Und-Gatters $U_4$ dem Codeimpulseingang der Auswerteeinrichtung W zugeführt; das Und-Gatter $U_3$ ist bei diesen Signalzuständen $SU_1$' $SU_2$ gesperrt. Wenn an den Eingängen des Und-Gatter $U_3$ gleichzeitig der Referenzimpuls $RS_n$' und die oberen Signalzustände $SO_1$' $SO_2$ der beiden Abtastsignale $S_1$' $S_2$ anliegen, wird dem Referenzimpuls $RS_n$' vom Ausgang des Und-Gatters $U_3$ dem Referenzimpulseingang der Auswerteeinrichtung W zugeleitet; das Und-Gatter $U_4$ ist bei diesen Signalzuständen $SO_1$`

SO$_2$ gesperrt.

Bei der Schaltungsanordnung gemäß Figur 4 können die beiden Und-Gatter U$_1$, U$_2$ dann entfallen, wenn die Impulslänge des Referenzimpulses RS$_n$ und des Codeimpulses CS$_n$ innerhalb des Bereichs der zugeordneten Signalzuständen SO$_1$, SO$_2$, SU$_1$, SU$_2$ der periodischen Abtastsignale S$_1$, S$_2$ liegt. Der Referenzimpuls RS$_n$ und der Codeimpuls CS$_n$ werden in diesem Fall direkt den beiden Eingängen des Oder-Gatters 0 zugeführt.

In nicht dargestellter Weise können auch die Referenzimpulse RS$_n$ auf einer Signalleitung für die Codeimpulse CS$_n$ übertragen werden, so daß die Signalleitung LR für die Referenzimpulse RS$_n$ entfallen kann. Der Referenzimpuls RS$_n$ kann beispielsweise auch dem oberen Signalzustand SO$_1$ des Abtastsignals S$_1$ und dem unteren Signalzustand SU$_2$ des Abtastsignals S$_2$ und der Codeimpuls CS$_n$ dem unteren Signalzustand SU$_1$ des Abtastsignals S$_1$ und dem oberen Signalzustand SO$_2$ des Abtastsignals S$_2$ zugeordnet werden.

Werden bei einer derartigen Meßeinrichtung den Referenzmarken R$_n$ keine Codemarken C$_n$ zugeordnet, sondern erfolgt die Identifizierung der einzelnen identischen Referenzmarken R$_n$ durch Auswertung der unterschiedlichen Abstände zwischen den einzelnen Referenzmarken R$_n$ so können anstelle der Codeimpulse CS$_n$ auch andere zusätzliche Signalimpulse, beispielsweise beliebige Überwachungsimpulse, auf der Leitung LR für die Referenzimpulse RS$_n$ übertragen werden.

**Ansprüche**

1. Verfahren zur Signalübertragung bei einer Längen- oder Winkelmeßeinrichtung, bei der bei der Abtastung einer Maßverkörperung von einer Abtasteinheit wenigstens ein periodisches Abtastsignal S1, S2 zwei Signalzuständen auf wenigstens einer ersten Signalleitung L1, L2 und wenigstens ein nichtperiodisches Signal RS$_n$ auf wenigstens einer zweiten Signalleitung LR an eine Auswerteeinrichtung übertragen werden, dadurch gekennzeichnet, daß zur Übertragung wenigstens eines zusätzlichen nichtperiodischen Signals (CS$_n$) auf der zweiten Signalleitung (LR) die nichtperiodischen Signale (RS$_n$, CS$_n$) auf der zweiten Signalleitung (LR) zur gegenseitigen Unterscheidung jeweils unterschiedlichen Signalzuständen (SO, SU) des wenigstens einen periodischen Signals (S) auf der wenigstens einen ersten Signalleitung (L) durch logische Verknüpfung mittels Gatter (U) zugeordnet sind.

2. Verfahren nach Anspruch 1, bei der die Maßverkörperung eine Teilung und dieser Teilung absolut zugeordnete Referenzmarken mit zugehörigen Codemarken aufweist, dadurch gekennzeichnet, daß die Abtasteinheit (A) die Teilung (T) zur Erzeugung des wenigstens einen periodischen Abtastsignals (S$_1$, S$_2$), die Referenzmarken (R$_n$) zur Erzeugung des wenigstens einen nichtperiodischen Signals (RS$_n$) in Form eines Referenzimpulses und die zugehörigen Codemarken (Cn) zur Erzeugung des zusätzlichen nichtperiodischen Signals (CS$_n$) in Form eines Codeimpulses abtastet.

3. Verfahren nach Anspruch 1, dadurch gekennzeichnet, daß das zusätzliche nichtperiodische Signal aus einem Überwachungssignal besteht.

4. Einrichtung zur Durchführung des Verfahrens nach Anspruch 1, dadurch gekennzeichnet, daß wenigstens ein nichtinvertierender erster Eingang eines ersten Und-Gatters (U$_1$) sowie wenigstens ein invertierender erster Eingang eines zweiten Und-Gatters (U$_2$) jeweils mit einer ersten Signalleitung (L) verbunden sind, daß der nichtinvertierende zweite Eingang des ersten Und-Gatters (U$_1$) mit dem nichtperiodischen Signal (RS$_n$) und der nichtinvertierende zweite Eingang des zweiten Und-Gatters (U$_2$) mit dem zusätzlichen nichtperiodischen Signal (CS$_n$) beaufschlagt sind, daß die Ausgänge der beiden Und-Gatter (U$_1$, U$_2$) an die Eingänge eines Oder-Gatters (0) angeschlossen sind, dessen Ausgang über die zweite Signalleitung (LR) mit den nichtinvertierenden zweiten Eingängen eines dritten Und-Gatters (U$_3$) und eines vierten Und-Gatters (U$_4$) verbunden sind, und daß der wenigstens eine nichtinvertierende erste Eingang des dritten Und-Gatters (U$_3$) sowie der wenigstens eine invertierende erste Eingang des vierten Und-Gatters (U$_4$) jeweils an die wenigstens eine erste Signalleitung (L) angeschaltet sind.

5. Einrichtung nach Anspruch 4, dadurch gekennzeichnet, daß die wenigstens eine erste Signal-Leitung (L) und die Ausgänge des dritten Und-Gatters (U$_3$) und des vierten Und-Gatters (U$_4$) an eine Auswerteeinrichtung (W) angeschaltet sind.

**Claims**

1. A method for signal transmission in a length or angle measurement device, in which, during scanning of a material measure, at least one periodic scanner signal (S$_1$,S$_2$) with two signal conditions is transmitted on at least one first

signal line ($L_1$, $L_2$), and at least one non-periodic signal ($RS_n$) on at least one second signal line (LR), to an evaluation device, characterised in that in order to transmit at least one additional non-periodic signal ($CS_n$) on the second signal line (LR), the non-periodic signals ($RS_n$' $CS_n$) on the second signal line (LR), for purposes of mutual differentiation, are each associated with different signal conditions (SO, SU) of the at least one periodic signal (S) on the at least one first signal line (L), by logical connection by means of gates (U).

2.   A method according to Claim 1, in which the material measure has a division and reference marks associated absolutely with this division, with associated code marks, characterised in that the scanner unit (A) scans the division (T) in order to generate the at least one periodic scanner signal ($S_1$, $S_2$), the reference marks ($R_n$) in order to generate the at least one non-periodic signal ($RS_n$) in the form of a reference pulse, and the associated code marks ($C_n$) in order to generate the additional non-periodic signal ($CS_n$) in the form of a code pulse.

3.   A method according to Claim 1, characterised in that the additional non-periodic signal consists of a monitoring signal.

4.   A device for carrying out the method according to Claim 1, characterised in that at least one non-inverting first input of a first AND gate ($U_1$), and at least one inverting first input of a second AND gate ($U_2$) are each connected to a first signal line (L), that the non-inverting second input of the first AND gate ($U_1$) has applied thereto the non-periodic signal ($RS_n$), and the non-inverting second input of the second AND gate ($U_2$) has applied thereto the additional non-periodic signal ($CS_n$), that the outputs of the two AND gates ($U_1$, $U_2$) are connected to the inputs of an OR gate (O) whose output is connected via the second signal line (LR) to the non-inverting second inputs of a third AND gate ($U_3$) and of a fourth AND gate ($U_4$), and that the at least one non-inverting first input of the third AND gate ($U_3$) and the at least one inverting first input of the fourth AND gate ($U_4$) are each connected to the at least one first signal line (L).

5.   A device according to Claim 4, characterised in that the at least one first signal line (L) and the outputs of the third AND gate ($U_3$) and of the fourth AND gate ($U_4$) are connected to an evaluation device (W).

**Revendications**

1.   Procédé de transmission de signaux dans un dispositif de mesure de longueurs ou d'angles, dans lequel lors de la lecture d'une règle de mesure par une unité de lecture, on transmet à un dispositif d'évaluation au moins un signal de lecture périodique à deux états ($S_1$, $S_2$) sur au moins une première ligne de signaux ($L_1$, $L_2$) et au moins un signal apériodique ($RS_n$) sur au moins une deuxième ligne de signaux (LR), caractérisé par le fait que, pour transmettre au moins un signal apériodique Supplémentaire ($CS_n$) sur la deuxième ligne de signaux (LR), les Signaux apériodiques ($RS_n$, $CS_n$) sur la deuxième ligne de signaux (LR) sont conjugués chacun en vue de leur différenciation mutuelle, à différents états (SO, SU) dudit signal périodique (S) sur ladite première ligne de signaux (L), cela par combinaison logique au moyen de portes (U).

2.   Procédé selon la revendication I, dans lequel la règle de mesure présente une graduation et cette graduation présente des marques de référence conjuguées de manière absolue, dotées de marques de code correspondantes, caractérisé par le fait que l'unité de lecture (A) lit la graduation (T) pour produire ledit signal de lecture périodique au nombre d'au moins un ($S_1$, $S_2$), les marques de référence ($R_n$) pour produire ledit signal apériodique au nombre d'au moins un ($RS_n$) sous la forme d'une impulsion de référence, et les marques de code conjuguées ($C_n$) pour produire ledit signal apériodique supplémentaire ($CS_n$) sous la forme d'une impulsion de code.

3.   Procédé selon la revendication 1, caractérisé par le fait que le signal apériodique supplémentaire est constitué par un signal de surveillance.

4.   Dispositif de mise en oeuvre du procédé selon la revendication 1, caractérisé par le fait qu'au moins une première entrée non inverseuse d'une première porte ET ($U_1$) ainsi qu'au moins une première entrée inverseuse d'une deuxième porte ET ($U_2$) sont reliées chacune à une première ligne de signaux (L), par le fait que la deuxième entrée non inverseuse de la première porte ET ($U_1$) reçoit le signal apériodique ($RS_n$) et la deuxième entrée non inverseuse de la deuxième porte ET ($U_2$) reçoit le signal apériodique supplémentaire ($CS_n$) par le fait que les sorties des deux portes ET ($U_1$, $U_2$) sont raccordées aux entrées d'une porte OU (O) dont la sortie est reliée, par la deuxième ligne de signaux (LR), aux deuxièmes entrées non inverseuses d'une troisième porte ET ($U_3$) et d'une quatrième porte ET ($U_4$), et par le fait que ladite première entrée non inverseuse au nombre d'au moins une de la troisième porte ET ($U_3$) ainsi que ladite première entrée inverseuse au nombre d'au moins une de la quatrième porte ET ($U_4$) sont raccordées chacune à ladite première ligne de signaux (L) au nombre d'au moins une.

5. Dispositif selon la revendication 4, caractérisé par le fait que ladite première ligne de signaux (L) au nombre d'au moins une et les sorties de la troisième porte ET ($U_3$) et de la quatrième porte ET ($U_4$) sont raccordées à un dispositif d'évaluation (W).

*Fig.1*

*Fig.2*

*Fig.2a*

*Fig.2b*

*Fig.3a* $S_1$
*Fig.3b* $S_2$
*Fig.3c* RSn
*Fig.3d* CSn
*Fig.3e* RSn' CSn'

*Fig.4*